# EUROPEAN PATENT APPLICATION

(11) **EP 3 165 824 A1**
(43) Date of publication of application: **10.05.2017**
(21) Application number: 16197306.0
(22) Date of filing: 04.11.2016
(51) Int. Cl.: F23R 3/06, F23M 5/08

(54) **COOLED COMBUSTOR FOR A GAS TURBINE ENGINE**

(30) Priority: 06.11.2015 US 201514934867
(71) Applicant: General Electric Company, Schenectady, NY 12345 (US)
(72) Inventor: NASR, Hojjat, West Chester, OH 45069 (US); ZHANG, Juntao, Evendale, OH 45215 (US); SCHLADT, Jessica, West Chester, OH 45069 (US); GONYOU, Craig Alan, West Chester, OH (US)
(74) Representative: Illingworth-Law, William Illingworth

(57) **Abstract**

A combustor 30 for a gas turbine engine 10 comprises a combustion liner 78 to define a combustion chamber 80 for burning fuel to drive to a turbine 34. The combustion liner 78 comprises a plurality of nugget holes 84 for providing cooling fluid to create a cooling film over the surface of the combustion liner 78 adjacent the combustion chamber 80. The nugget holes 84 can be circumferentially angled relative to the engine centerline 12 to provide the flow of cooling fluid in an angled manner to align with a local streamline flow 170 of fluid from the combustor 30.

## Description

### BACKGROUND OF THE INVENTION

Turbine engines, and particularly gas or combustion turbine engines, are rotary engines that extract energy from a flow of combusted gases passing through the engine onto a multitude of rotating turbine blades. Gas turbine engines have been used for land and nautical locomotion and power generation, but are most commonly used for aeronautical applications such as for aircraft, including helicopters. In aircraft, gas turbine engines are used for propulsion of the aircraft. In terrestrial applications, turbine engines are often used for power generation.

Gas turbine engines for aircraft are designed to operate at high temperatures to maximize engine efficiency, so cooling of certain engine components, such as the high pressure turbine and the low pressure turbine, can be beneficial. Typically, cooling is accomplished by ducting cooler air from the high and/or low pressure compressors to the engine components that require cooling. Temperatures in the high pressure turbine are around 1000 °C to 2000 °C and the cooling air from the compressor is around 500 °C to 700 °C. While the compressor air is a high temperature, it is cooler relative to the turbine air, and can be used to cool the turbine.

Contemporary combustors have liners to define the combustion chamber for burning fuel upstream from the turbine. The liners can be cooled with a flow of cooling air from such as film cooling and nugget hole cooling. These methods, however, are subject to the turbulent airflow created by the combustor. Thus, typical liner cooling can be disrupted, creating varying temperature gradients along the liner.

### BRIEF DESCRIPTION OF THE INVENTION

A combustor for a gas turbine engine comprising a combustion liner defining a combustion chamber, a fuel nozzle emitting a fuel/air mixture in a swirling flow into the combustion chamber, and a plurality of cooling passages extending through the liner and having a passage centerline aligned with a local streamline for the swirling flow. Cooling air entering the combustion chamber through the cooling passages is locally aligned with the swirling flow.

A method of cooling a combustor of a gas turbine engine comprising emitting a swirling flow of fuel/air mixture from a fuel nozzle into a combustor liner and emitting a cooling air flow into the combustor liner such that the cooling air flow is substantially aligned with the swirling flow.

A method of cooling a combustor of a gas turbine comprising emitting a swirling flow of fuel/air mixture form a fuel nozzle into a combustor liner and emitting a cooling air flow into the combustor liner without disrupting the swirling flow.

### BRIEF DESCRIPTION OF THE DRAWINGS

In the drawings:
FIG. 1 is a schematic cross-sectional diagram of a gas turbine engine for an aircraft.
FIG. 2 is a schematic cross-sectional diagram of a combustor section transitioning into a turbine section of the engine of FIG. 1.
FIG. 3 is a cut-away, perspective view of the combustor section and illustrating a plurality of swirlers and a combustor liner.
FIG. 4 is a perspective view of a section of the combustor liner of FIG. 3.
FIG. 5 is a side perspective view of the combustor liner of FIG. 3 illustrating axially angled nugget holes.
FIG. 6 is a top perspective view of the combustor liner of FIG. 3 illustrating radially angled nugget holes.
FIG. 7 is a top schematic view of a section of the combustor liner of FIG. 3 illustrating the flow paths through the nugget holes and from the swirler.
FIG. 8 is the top schematic view of FIG. 7 illustrating the near liner wall flow path-lines originating from the nugget holes with no angle.
FIG. 9 is the top schematic view of FIG. 7 illustrating the near liner wall flow path-lines originating from 30° angled nugget holes.
FIG. 10 is the top schematic view of FIG. 7 illustrating the near liner wall flow path-lines originating from 45° angled nugget holes.
FIG. 11 is a top schematic view of differing near liner wall flow path-lines disposed axially along the liner.

### DESCRIPTION OF EMBODIMENTS OF THE INVENTION

The described embodiments of the present invention are directed to a turbine combustor, and in particular to cooling a combustor liner wall. For purposes of illustration, the present invention will be described with respect to a turbine blade for an aircraft gas turbine engine. It will be understood, however, that the invention is not so limited and can have general applicability in non-aircraft applications, such as other mobile applications and non-mobile industrial, commercial, and residential applications.

As used herein, the terms "axial" or "axially" refer to a dimension along a longitudinal axis of an engine. The term "forward" or "upstream" used in conjunction with "axial" or "axially" refers to moving in a direction toward the engine inlet, or a component being relatively closer to the engine inlet as compared to another component. The term "aft" or "downstream" used in conjunction with "axial" or "axially" refers to a direction toward the rear or outlet of the engine relative to the engine centerline.

As used herein, the terms "radial" or "radially" refer to a dimension extending between a center longitudinal axis of the engine and an outer engine circumference. The use of the terms "proximal" or "proximally," either by themselves or in conjunction with the terms "radial" or "radially," refers to moving in a direction toward the center longitudinal axis, or a component being relatively closer to the center longitudinal axis as compared to another component. The use of the terms "distal" or "distally," either by themselves or in conjunction with the terms "radial" or "radially," refers to moving in a direction toward the outer engine circumference, or a component being relatively closer to the outer engine circumference as compared to another component.

All directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding, and do not create limitations, particularly as to the position, orientation, or use. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. The exemplary drawings are for purposes of illustration only and the dimensions, positions, order and relative sizes reflected in the drawings attached hereto can vary.

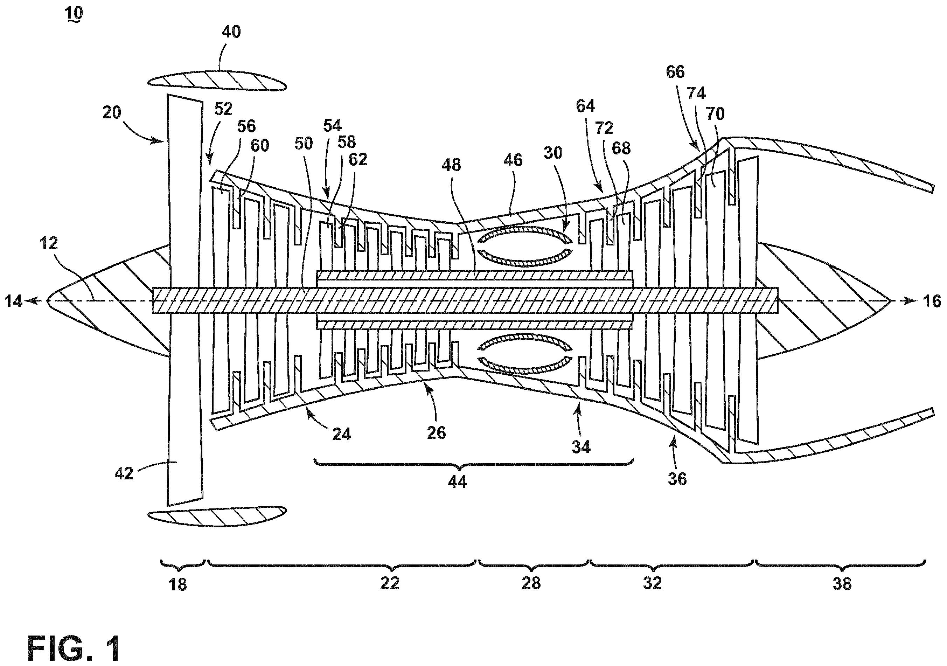

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

Some of the ambient air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but is not limited to, fluid discharged from the LP compressor 24 or the HP compressor 26.

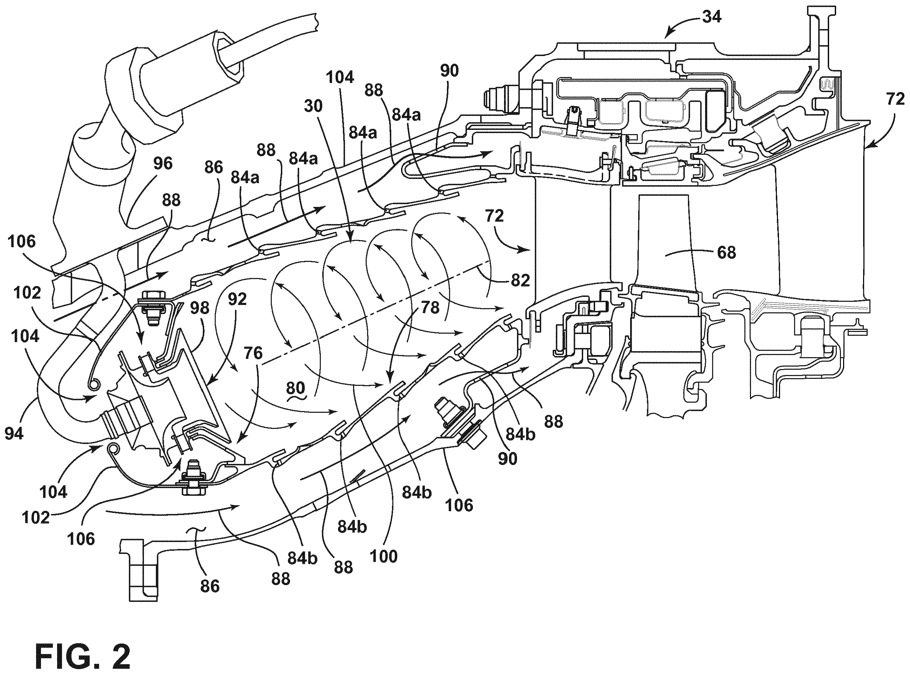

FIG. 2 is a side section view of the combustor 30 and HP turbine 34 of the engine 10 of FIG. 1. The combustor 30 includes a deflector assembly 76 and a combustion liner 78 to define a combustion chamber 80. The combustion liner 78 further comprises a plurality of cooling passages or openings, shown as nugget holes 84a, 84b. The nugget holes 84a, 84b can be oriented as axial nugget holes 84a, exemplarily illustrated at the top of the combustion liner 78, or can be oriented as radial nugget holes 84b, exemplarily illustrated at the bottom of the combustion liner 78. The axial nuggets holes 84a are disposed such that the aperture defines a passage extending in a direction substantially parallel to a longitudinal axis 82 through the combustor 30. The radial nugget holes 84b are disposed such that the aperture defines a passage extending in a direction substantially radial to the longitudinal axis 82 through the combustor 30. It should be appreciated that while the axial nugget holes 84a are illustrated at the top of the combustion liner 78 and the radial nugget holes 84b are illustrated at the bottom of the combustion liner 78, the combustion liner 78 can have any type of nugget holes 84a, 84b at any location are should not be understood as limiting by the illustration of FIG. 2.

The nugget holes 84a, 84b provide fluid communication between the combustion chamber 80 and a set of bypass channels 86, one disposed radially inside the combustor 30 and one disposed radially outside of the combustor 30, relative to the engine centerline 12. The bypass channels 86 provide a flow of fluid 88 from the compressor section 26 to the turbine section 34 bypassing the combustor 30 through a set of openings 90. Additionally, the bypass channels 86 provide a flow of cooling fluid to the nugget holes 84a, 84b for providing cooling along the surface of the combustion liner 78.

The combustor 30 further comprises a fuel nozzle 92 for emitting and igniting a fuel/air mixture into the combustion chamber 80. The fuel nozzle 92 comprises a fuel line 94 mounted to the combustor 30 at a mount 96. The fuel/air mixture is emitted into the combustion chamber 80 from a swirler 98, which swirls the fuel/air mixture as a swirling flow 100 as it enters the combustion chamber 80. While the swirling flow 100 is illustrated as moving in a counter-clockwise direction in FIG. 2, it should be appreciated that the swirling flow 100 comprises an annular or helical flow around the longitudinal axis 82 moving in an aft direction.

The deflector assembly 76 comprises a deflector 102 disposed forward of the swirler 98. A gap 104 is defined between the deflector 102 and the fuel line 94, providing fluid communication between the compressor section 26 and the combustor 30. Air is provided to the fuel nozzle 92 from the gap 104 an through a plurality of inlets 106 disposed in the swirler 98, such that the air mixes with fuel injected from the fuel line 94 to create the fuel/air mixture.

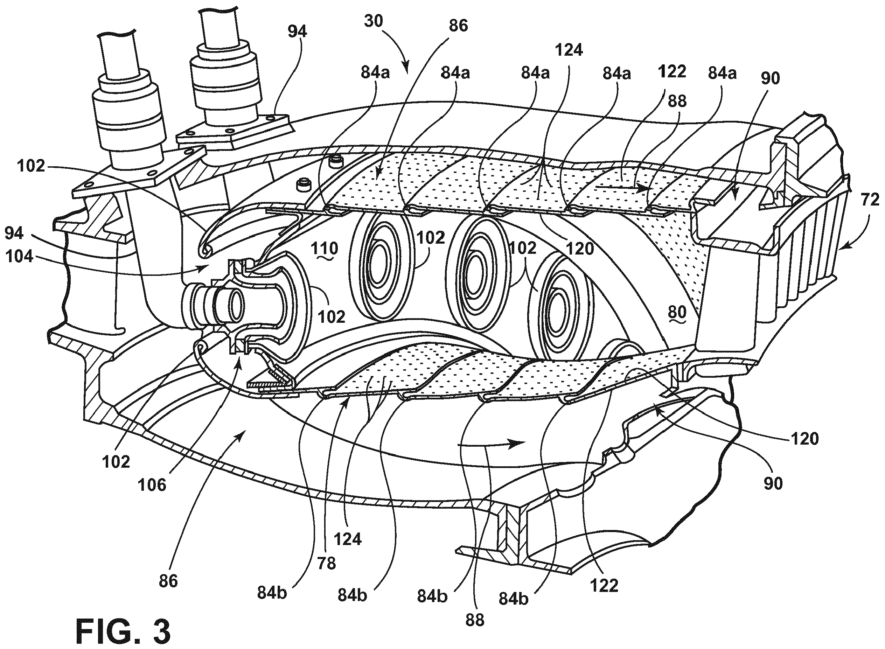

Turning to FIG. 3, the three-dimensional aspects of the combustor 30 shows a circular rear wall 110 separating the combustion chamber 80 from the gap 104. The rear wall 110 is disposed radially with respect to the engine centerline 12, separating and supporting the fuel nozzles 92. The definition of the combustion liner 78 can be appreciated, having multiple panels with the nugget holes 84a, 84b disposed at the junctions between the layers. The combustion liner 78 can comprise an inner periphery or surface 120 adjacent to the combustion chamber 80 and an outer periphery or surface 122 adjacent to the bypass channel 86. The surfaces 120, 122 can have a plurality of film holes 124 providing fluid communication between the bypass channels 86 and the combustion chamber 80 providing a layer of cooling film along the inner surface of the combustion liner 78.

Considering FIG. 3 with the swirling flow 100 as shown in FIG. 2, it can be understood that each individual swirler 98 swirls a fuel/air mix entering the combustion chamber 80. Thus, the swirling flow 100 can contact the combustion liner 78 having a varying magnitude depending on the position of the combustion liner 78 relative to the position of one or more nearby swirlers 98. From the swirling flow 100 of the swirlers 98, local airflow paths can be created adjacent to local areas of the combustion liner 78, which can differ from other local areas of the combustor liner 30. As such, the nugget holes 84a, 84b can be variably distributed to comprise a distribution density for the nugget holes 84a, 84b corresponding to a local flow for the swirling flow 100.

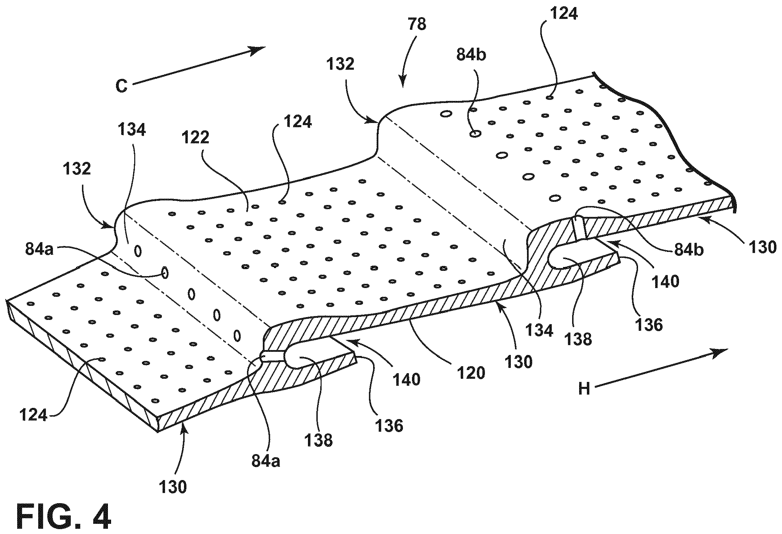

FIG. 4 shows an exemplary section of the combustion liner 78 illustrating sections of three panels 130. The panels 130 join at integral cooling nuggets 132. The individual panels 130 are thin cylindrical or conical rings conventionally configured for the particular combustor design. The cooling nuggets 132 are locally enlarged regions at which the axially adjacent panels 130 are joined together for introducing a flow of cooling fluid into the combustion chamber 80. Such a flow can be introduced through the plurality of film holes 124 disposed in the combustion liner 78. As exemplarily illustrated, the nuggets 132 can provide communication from the outer surface 122 to the inner surface of the combustor 30 through a plurality of nugget holes 84a, 84b as either axial nugget holes 84a or radial nugget holes 84b. Each nugget 132 further comprises a radially extending bridge 134 integrally joining a downstream panel 130. The panels 130 are conventional and joined axially end-to-end, with any two adjoining panels 130 described herein as forward or aft layers, which form the upstream forward end of the combustor 30 to the downstream aft end of the combustor 30.

An axial lip 136 extends aft from the distal end of a forward panel 130 at the bridge 134 and is spaced inboard from the proximal end of the next panel 130 to define a slot 138 radially therebetween, having an outlet 140 at the aft end thereof.

It should be understood that the nugget holes as illustrated are for example only. Nugget holes 84a, 84b can be all disposed radially, axially, or a combination or offset thereof. The nuggets 132 can have a mix of axially and radially disposed nugget holes 84a, 84b and can be implemented locally based upon the local needs of the combustion liner 78 or the local swirling flow 100 from the swirlers 98. As such, the nugget holes 84a, 84b can emit a cooling air flow through multiple discrete locations through the combustion liner 78.

It should be appreciated that the nugget holes 84a, 84b provide a flow of cooling fluid C from external of the combustion chamber 80 to the inner surface 120 of the combustion liner 78 within the combustion chamber 80. The cooling fluid C is additionally provided through a plurality of film holes 124 such that a cooling film is disposed along the inner surface 120 of the combustion liner 78, preventing a flow of hot fluid H generated by the combustor 30 from excessively heating the combustion liner 78. Cooling fluid C passing through the nugget holes 84a, 84b is directed through the outlet 140 such that the cooling fluid C moves along the inner surface 120 of the combustion liner 78.

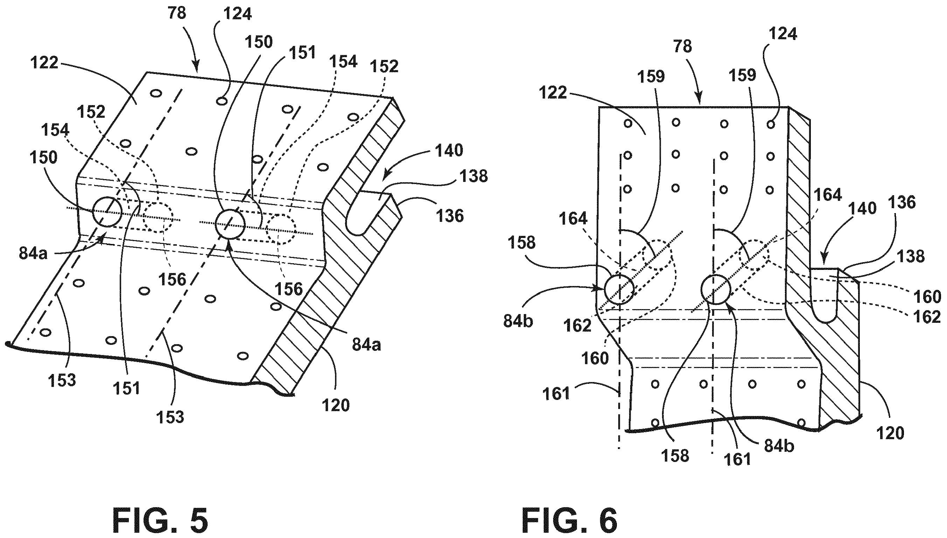

FIG. 5 illustrates axial film holes 84a having an inlet 150 on the outer surface 122 of the combustion liner 78 and an outlet 152 on the inner surface 120. The inlet 150 provides fluid communication to the outlet 152 through a passage 154 defined between the inlet 150 and the outlet 152. The passage 154 can define a passage centerline 156 defined longitudinally through the passage 154. The passage centerline defined by a typical axial nugget hole extending in a forward to aft direction. The axial nugget holes 84a in FIG. 5 are angled, such that an angle 151 is defined between the passage centerline 156 and a projection of the engine centerline 153 in the circumferential direction of the combustor 30. As such, a cooling fluid passing through the angled axial nugget holes 84a can exit through the outlet 152 in a direction offset from parallel to the projection of the engine centerline 153 within the combustor 30, being defined by the angle 151 of the passage 154.

FIG. 6 illustrates radial nugget holes 84b being radially offset similar to the axial film holes 84a of FIG. 5. The radial nugget holes 84b have an inlet 158 in fluid communication with an outlet 160 being disposed on the outer surface 122 and the inner surface 120, respectively. A passage 162 is defined between the inlet 158 and the outlet 160, further defining a passage centerline 164 through the passage 162. The radial nugget holes 84b are angled in both the radial and axial directions defined by an angle 159 relative to a projection of the engine centerline 161 onto the liner 78. As such, cooling fluid passing through the angled radial nugget holes 84b can exit the outlet 160 in a direction offset from parallel to the projection of the engine centerline 161 defined by the angle 159 of the passage 162. It should be appreciated that the angles 151, 159of the nugget holes 84a, 84b can be in any direction relative to the longitudinal direction of the projections of the engine centerline 153,161. The passages 154, 162 can define passage centerlines 156, 164 comprising angles 151, 159 offset relative to the projections of the engine centerline 153, 161, a radial axis with respect to the engine centerline 12, or both. The angle 151, 159 can be any angle between 0 and 70 degrees and can be defined through the combination of radially and axially offset. The angle 151, 159 for local nugget holes can differ from other nugget holes or even adjacent nugget holes, with some nugget holes having a greater or lesser angle 151, 159, or having a different direction or orientation.

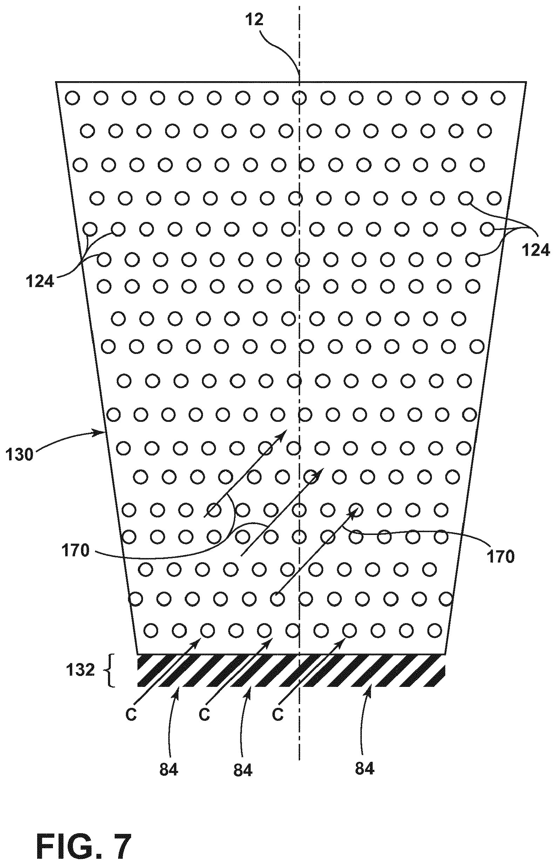

FIG. 7 is a top schematic view of one panel 130 and a set of nugget holes 84 disposed on a nugget 132. The nugget holes 84 can be either radial or axial, or a combination thereof. The swirling flow 100 of FIG. 2 can further define a local scrub flow 170 as shown in FIG. 7. The local scrub flow 170 comprises a local magnitude defined by the swirling flow 100 from the swirler 98, and pushes against the combustion liner 78 and the local panels 130 as it swirls. As can be appreciated, the nugget holes 84 are angled to provide the cooling fluid C at an angle aligned with the local scrub flow 170. As such, the cooling fluid C is introduced along the inner surface 120 of the combustion liner 78 in the same direction as the local scrub flow 170. It should be further appreciated that the nugget holes 84 can be angled to provide increase cooling fluid to a particular area or region of the combustion liner 78 based upon the local temperature gradient being higher or lower relative to adj acent areas or regions of the combustion liner 78.

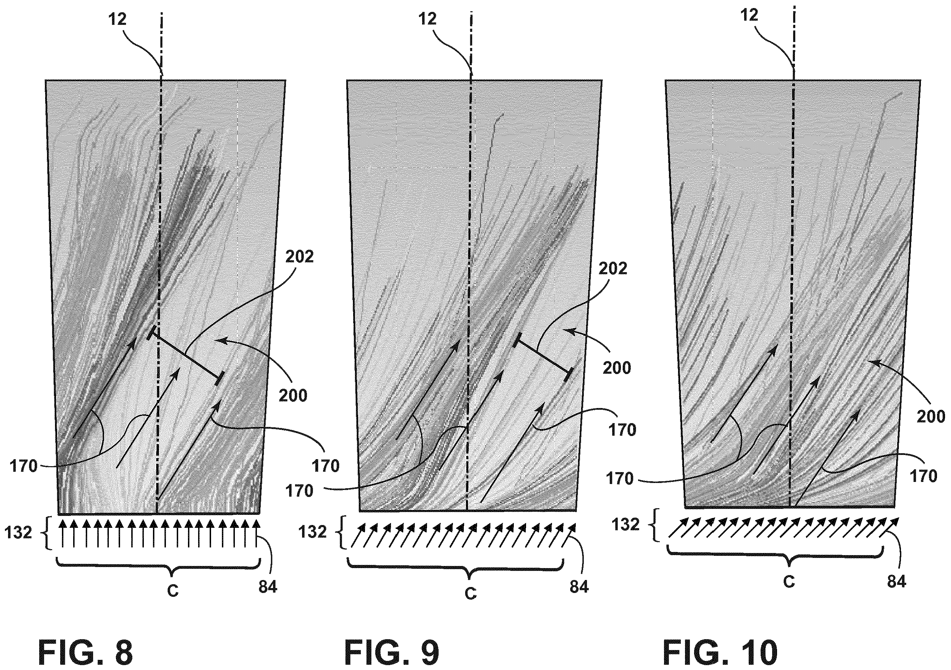

Turning to FIGS. 8 - 10, path lines of the cooling airflow C originating from the nugget holes 84 as affected by the local scrub flow 170 can be appreciated. Looking first at FIG. 8, the flow from the nugget holes 84 moves in an axial direction having respect to the engine centerline 12. The swirling flow 100 of the scrub flow 170 creates a scrub gap 200 having a width 202 defined by the scrub flow 170 pushing the cooling flow C from the nugget holes 84. Thus, the cooling flow C from the nugget holes is pushed away by the main swirling flow 100.

The flow path illustrated in FIG. 8 defined by the axially oriented nugget holes 84 is undesirable. The local scrub flow 170 creates the scrub gap 200 by pushing the cooling flow C away from the inner surface 120 of the combustion liner 78. The scrub flow 170 can create localized areas of increased temperature, which can result in decreased engine performance, decreased efficiency, as well as component damage, decreasing overall time-on-wing.

Turning to FIG. 9, the nugget holes 84 are illustrated as having a 30-degree angle in the circumferential direction relative to the engine centerline 12. It can be appreciated that the width 202 of the scrub gap 200 has decreased as the angle of the nugget holes 84 better aligns with the angle of the local scrub flow 170.

In FIG. 10, the nugget holes 84 are illustrated as having a 45-degree angle in the circumferential direction relative to the engine centerline 12. The cooling fluid C passing through the nugget holes 84 is aligned with the swirling flow 100 within the combustion chamber 80. As can be appreciated, the scrub gap 200 identifiable in FIGS. 8 and 9 is indistinguishable, creating a uniformly distributed cooling flow C along the inner surface 120 of the combustion liner 78.

Thus, it should be appreciated that while the example shown in FIG. 10 illustrates a significant reduction of the scrub gap 200 at one local area along the combustion liner 78, the nugget holes 84 can be locally adapted at angles from 0 to 70 degrees in order to compensate for the local scrub flow 170 based upon the local swirling flow 100 from a position relative to the swirlers 98.

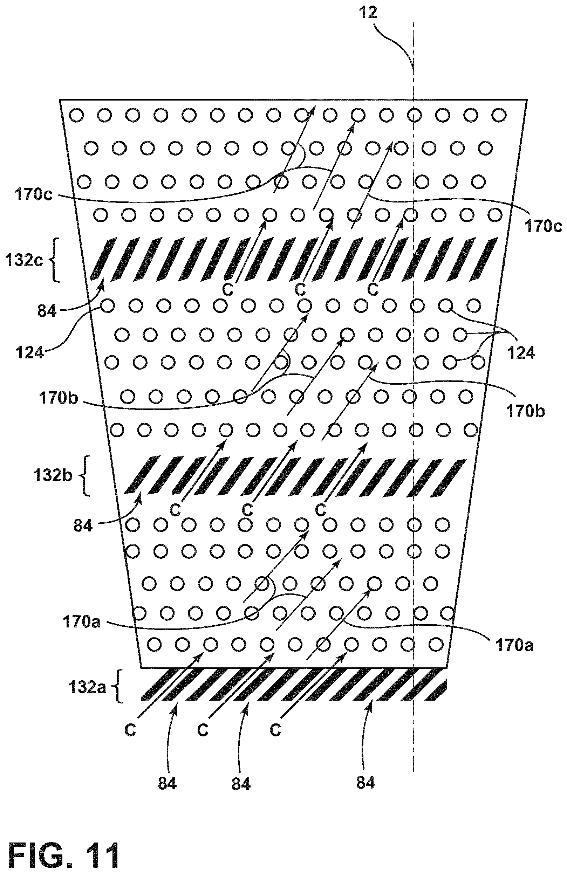

Turning to FIG. 11, the swirling flow changes in angular orientation relative to the axial engine centerline 12 as the swirling flow swirls through the combustor 30. The combination of panels 130 form a plurality of multiple, axially arranged nuggets 132a, 132b, 132c comprising nugget holes 84 to provide the cooling flow C to the interior of the combustor 30 along the combustion liner 78 as a cooling film. Local swirling flows 170a, 170b, 170c have differing angular orientations as the swirling flow swirls through the combustor 30. As such, the local orientation of the nugget holes 84 in separate nuggets 132a, 132b, 132c can be oriented to align with the local swirling flows 170a, 170b, 170c.

For example, as shown in FIG. 11, a first nugget 132a comprises nugget holes 84 having a 45-degree angle relative to the engine centerline 12 in order to align with the first local flow 170a. As the swirling flow moves aft, the second local flow 170b can turn or swirl, having a different angular orientation from the first local flow 170a, relative to the engine centerline 12. A second nugget 132b comprises nugget holes 84 having a 30-degree angle relative to the engine centerline 12, aligning with the second local flow 170b. Further aft, the third nugget 132c can have nugget holes 84 having a 15-degree angle, in order to align with a third local flow 170c.

It should be understood that the local flows, nuggets, and nugget hole arrangements illustrated in FIG. 11 are exemplary, and are provided in order to assist in the reader's understanding that the nugget holes 84 within axially separate nuggets 132 can differ from one another to align with the local flow 170 as it changes angular orientation with the swirling flow moving through the combustor 30.

It should also be understood that a plurality of nugget holes disposed within one nugget can discretely vary in angular orientation relative to other nugget holes, or can comprise groups, which vary in angular orientation relative to other groups. As such, the nugget holes within in one nugget can compensate for differing local flows spaced circumferentially around the combustor.

It should be appreciated that angling the nugget holes in the circumferential direction can provide a uniform flow of cooling fluid along the combustor liner as provided by the nugget holes. It should be further appreciated that the nugget holes can be discretely angled, such that the cooling fluid can be distributed uniformly on a local basis, as the swirling flow from the combustor can change based upon the local area of the combustion liner relative to the swirlers. Thus, the nugget holes can define a distribution density on the combustion liner corresponding to the local swirling flow. Furthermore, the nugget holes can be distributed such that the flow of cooling fluid flowing through the nugget holes defines a flow distribution, which can be consistent around the radial combustion liner or can discretely correspond to the local swirling flow, such that the distribution density defines the flow distribution.

It should be further appreciated that the angled nugget holes can significantly reduce the occurrence of local hot spots resultant from the swirling flows of hot fluid within the combustor. The improved airflow and cooling can decrease overall temperature gradients that can increase film temperature compliance and time-on-wing as the combustion liner is exposed to lower film temperatures.

This written description uses examples to disclose the invention, including the best mode, and to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A combustor for a gas turbine engine comprising:
   a combustion liner defining a combustion chamber;
   a fuel nozzle emitting a fuel/air mixture in a swirling flow into the combustion chamber; and
   a plurality of cooling passages extending through the combustion liner and having a passage centerline aligned with a local streamline for the swirling flow;
   wherein cooling air entering the combustion chamber through the cooling passages is locally aligned with the swirling flow.
2. The combustor of clause 1 wherein the combustion liner comprises an outer periphery and the cooling passages are circumferentially spaced about the outer periphery.
3. The combustor of clause 1 or clause 2 wherein the combustion liner circumscribes the fuel nozzle and the cooling passages circumscribe the combustion chamber.
4. The combustor of any preceding clause further comprising a plurality of fuel nozzles mounted to a circular rear wall, with the fuel nozzles circumferentially arranged on the circular rear wall, and the combustor liner comprises outer and inner panels extending from the circular rear wall to define an annular combustion chamber for the fuel nozzles.
5. The combustor of any preceding clause wherein the cooling passages are distributed according the swirling flow from each of the fuel nozzles.
6. The combustor of any preceding clause wherein a distribution density of the cooling passages on the combustion liner corresponds to the swirling flow for each of the fuel nozzles.
7. The combustor of any preceding clause wherein a flow distribution of the cooling passages on the combustor liner corresponds to the swirling flow for each of the fuel nozzles.
8. The combustor of any preceding clause wherein a flow distribution of the cooling passages on the combustion liner corresponds to a combustion liner temperature contour.
9. The combustor of any preceding clause wherein the combustion liner comprises axially arranged panels joined together at a cooling nugget to form multiple, axially-spaced cooling nuggets, and the cooling passages extend through the cooling nuggets to define nugget holes.
10. The combustor of any preceding clause further comprising cooling openings in the panels between the cooling nuggets.
11. The combustor of any preceding clause wherein the cooling openings have at least one of a radial or radially offset centerline.
12. The combustor of any preceding clause comprising a rear wall supporting the fuel nozzle and the cooling passages are located in the rear wall.
13. The combustor of any preceding clause wherein the cooling passages circumscribe the fuel nozzle.
14. The combustor of any preceding clause wherein the nugget holes within the axially-spaced cooling nuggets are oriented to align with the local swirling flow immediately downstream from each of the cooling nuggets.
15. A method of cooling a combustor of a gas turbine engine, the method comprising:
   emitting a swirling flow of fuel/air mixture from a fuel nozzle into a combustor liner; and
   emitting a cooling air flow through the combustor liner such that the cooling air flow is substantially aligned with the swirling flow.
16. The method of any preceding clause wherein emitting the cooling air flow comprises emitting the cooling air flow at multiple discrete locations through the combustor liner.
17. The method of any preceding clause wherein emitted the cooling air flow at the discrete locations has a streamline generally aligned with a local streamline of the swirling flow.
18. The method of any preceding clause wherein emitting the cooling air flow through the multiple discrete locations comprises emitting cooling air flow through passages in the liner.
19. The method of any preceding clause wherein the passages have a centerline generally aligned with a local streamline for the swirling flow.
20. A method of cooling a combustor of a gas turbine engine, the method comprising:
   emitting a swirling flow of fuel/air mixture from a fuel nozzle into a combustor liner; and
   emitting a cooling air flow through the combustor liner without disrupting the swirling flow.
21. The method of any preceding clause wherein emitting the cooling air flow without disrupting the swirling flow comprises emitting the cooling air flow such that the cooling air flow is substantially aligned with the swirling flow.
22. The method of any preceding clause wherein emitting the cooling air flow comprises emitting the cooling air flow through passages in the liner.
23. The method of any preceding clause wherein the passages have a centerline generally aligned with a local streamline for the swirling flow.

## Claims

1. A combustor (30) for a gas turbine engine (10) comprising:
a combustion liner (78) defining a combustion chamber (80);
a fuel nozzle (92) emitting a fuel/air mixture in a swirling flow (100) into the combustion chamber (80); and
a plurality of cooling passages (84) extending through the combustion liner (78) and having a passage centerline (156) aligned with a local streamline (170) for the swirling flow (100);
wherein cooling air entering the combustion chamber (80) through the cooling passages (84) is locally aligned with the swirling flow (100).

2. The combustor (30) of claim 1 wherein the combustion liner (78) comprises an outer periphery (122) and the cooling passages (84) are circumferentially spaced about the outer periphery (122).

3. The combustor (30) of claim 1 or claim 2 wherein the combustion liner (78) circumscribes the fuel nozzle (92) and the cooling passages (84) circumscribe the combustion chamber (80).

4. The combustor (30) of any preceding claim, further comprising a plurality of fuel nozzles (92) mounted to a circular rear wall (110), with the fuel nozzles (92) circumferentially arranged on the circular wall (110), and the combustor liner (78) comprises outer and inner panels (130) extending from the circular wall (110) to define the annular combustion chamber (80) for the fuel nozzles (92).

5. The combustor (30) of any preceding claim, wherein the cooling passages (84) are distributed according the swirling flow (100) from each of the fuel nozzles (92).

6. The combustor (30) of any preceding claim, wherein a distribution density of the cooling passages (84) on the combustion liner (78) corresponds to the swirling flow (100) for each of the fuel nozzles (92).

7. The combustor (30) of any preceding claim, wherein a flow distribution of the cooling passages (84) on the combustor liner (78) corresponds to the swirling flow (100) for each of the fuel nozzles (92).

8. The combustor (30) of any preceding claim, wherein a flow distribution of the cooling passages (84) on the combustion liner (78) corresponds to a combustion liner temperature contour.

9. The combustor (30) of any preceding claim, wherein the combustion liner (78) comprises axially arranged panels (130) joined together at a cooling nugget (132) to form multiple, axially-spaced cooling nuggets (132), and the cooling passages (84) extend through the cooling nuggets (132) to define nugget holes (84).

10. The combustor of any preceding claim, further comprising cooling openings in the panels between the cooling nuggets.

11. The combustor of any preceding claim, wherein the cooling openings have at least one of a radial or radially offset centerline.

12. The combustor of any preceding claim, comprising a rear wall supporting the fuel nozzle and the cooling passages are located in the rear wall.

13. The combustor (30) of any preceding claim, wherein the nugget holes (84) within the axially-spaced cooling nuggets (132) are oriented to align with the local swirling (170) flow immediately downstream from each of the cooling nuggets (132).

14. A method of cooling a combustor of a gas turbine engine, the method comprising:
emitting a swirling flow of fuel/air mixture from a fuel nozzle into a combustor liner; and
emitting a cooling air flow through the combustor liner such that the cooling air flow is substantially aligned with the swirling flow.

15. A method of cooling a combustor of a gas turbine engine, the method comprising:
emitting a swirling flow of fuel/air mixture from a fuel nozzle into a combustor liner; and
emitting a cooling air flow through the combustor liner without disrupting the swirling flow.
